# EUROPEAN PATENT SPECIFICATION

(11) **EP 1 514 498 B1**
(45) Date of publication and mention of the grant of the patent: **31.01.2007**
(21) Application number: 03425585.1
(22) Date of filing: 09.09.2003
(51) Int. Cl.: A47G 27/04, E04F 15/02

(54) **Support for leather tiles**
Unterlage für Lederfliesen
Support pour dalle en cuir

(43) Date of publication of application: 16.03.2005
(73) Proprietor: Vagnoli, Ivano, 56024 Ponte a Egola, S. Miniato (PI) (IT)
(72) Inventor: Vagnoli, Ivano, 56024 Ponte a Egola, S. Miniato (PI) (IT)
(74) Representative: Celestino, Marco

(56) References cited:
- EP-A- 0 133 868
- EP-A- 1 039 061
- WO-A-01/29349
- DE-A- 2 427 712
- DE-A- 4 026 472
- FR-A- 2 816 342
- US-A- 4 864 790
- US-A1- 2002 124 501

## Description

### Field of the invention

The present invention relates to the building industry and more precisely it relates to a support for leather tiles having injections in plastic resin.

The word leather in the following description is referred to chrome leather, tanned leather, hide, imitation leather, etc.

### Background of the invention

Leather tiles have been made occasionally. One of the main problems met is the leather thickness irregularity that affects the final surface.

In some cases leather tiles have been made. One of the main problems met is the thickness irregularity of the leather that affects unavoidably the steps of fastening the tile to the ground or to the wall.

Even when a leather sheet is arranged on a wooden base, as is described in US 4864790, the problem is not solved; on the contrary, the irregularities of the leather sheets are much more enhanced on the wooden layer, the problem of safely fastening the tile to a surface remains unsolved.

Similarly, a material called "salpa", i.e. boards of pressed chips of hide/leather, is used as base for leather tiles meeting the same problems.

Furthermore, with the fastening systems presently in use the operations are also troublesome of removing the leather tiles, which would be unavoidably damaged. Such operations would be required when replacing damaged tiles, or simply for coating again a surface or still to allow an easy drying of possible humidity.

FR2816342 describes a tile combined to a support with releasable fastening means. The tile is wrapped by a leather layer, which is slimmed to allow wrapping. The tile has fastening means for combining with a support.

DE2427712 relates to a sport surface formed by a plurality of plastic layers wrapped by a flexible layer and forming together a floor element. Each floor element is then attached to the ground through a layer of foam and a Velcro releasable coupling.

EP1039061 relates to a lining element, particularly for aerated or floating lining of walls, floors, roofs or the like. It provides a lining layer which is glued, welded or otherwise anchored to an intermediate layer, consisting of a honeycomb or grid panel. The whole tile is enclosed in a casing, which in turn is mounted on spaced support elements.

### Summary of the invention

It is therefore a feature of the present invention to provide an arrangement of a support and a tile that allows an easy location of a tile assuring a solid fastening to the surface to coat and from which the tile can be easily unfastened in a desired moment.

It is another feature of the present invention to provide such an arrangement, which is structurally easy and cost effective.

These and other features are accomplished with one exemplary arrangement of a support and a tile, according to the present invention, wherein said tile has a leather layer and at least one plastic resin layer fixed to the leather layer, said support and said tile having cooperating means suitable for a mutual engagement, wherein said plastic resin layer comprises a first plastic resin layer fixed to the leather layer and a second plastic resin layer fixed to the first plastic resin layer, said second plastic resin layer being of a different type from the first resin layer, and the cooperating means of said tile are made of said second plastic resin layer.

Advantageously, said cooperating means comprises at least one projection and/or at least one recess. This way, it is possible to provide a solid fastening of the leather tile to the surface to coat by a system that can be easily unfastened. This allows removing quickly the leather tile from the relative support to provide a quick change thereof in a desired moment.

Preferably, the support is made of plastic resin of resilient type whereby at the moment of coupling it to a tile the edge of the or each recess is elastically forced by the corresponding projection.

Advantageously, the support is equipped with at least one groove that crosses it between two side edges thereof suitable for receiving a heating means, for example an electrical resistance or a duct crossed by a heating fluid. This way, it is possible to provide a heat exchange, which is very effective owing to the high heating surface that is eventually obtained.

In particular, the support may have a portion exceeding the leather tile that it sustains. In this case, the support for leather tiles is equipped with shaped side edges, in particular bevelled, which makes easier to approach adjacent supports during the laying steps.

Advantageously, the or each projection of the supports is integrated to the plastic resin layer.

Alternatively, the or each projection of the support is separate from the plastic resin layer. In particular, the or each projection can be applied to the support in a second moment, for example by a releasable coupling.

According to an exemplary embodiment of the invention a support for leather tiles with plastic resin injections comprises a plurality of supports as above described adjacent and operatively connected to the each other in order to form a single body capable of receiving a plurality of tiles. In this case, the support can be easily transported after rolling it up.

Preferably, said first plastic resin layer fixed to said leather layer is extended up to the upper surface of the leather layer by through holes.

### Brief description of the drawings

Further characteristics and the advantages of the support, according to the invention, for tiles having a leather layer and a plastic resin layer will be made clearer with the following description of an exemplary embodiment thereof, exemplifying but not limitative, with reference to the attached drawings, in which like reference characters designate the same or similar parts throughout the figures of which:

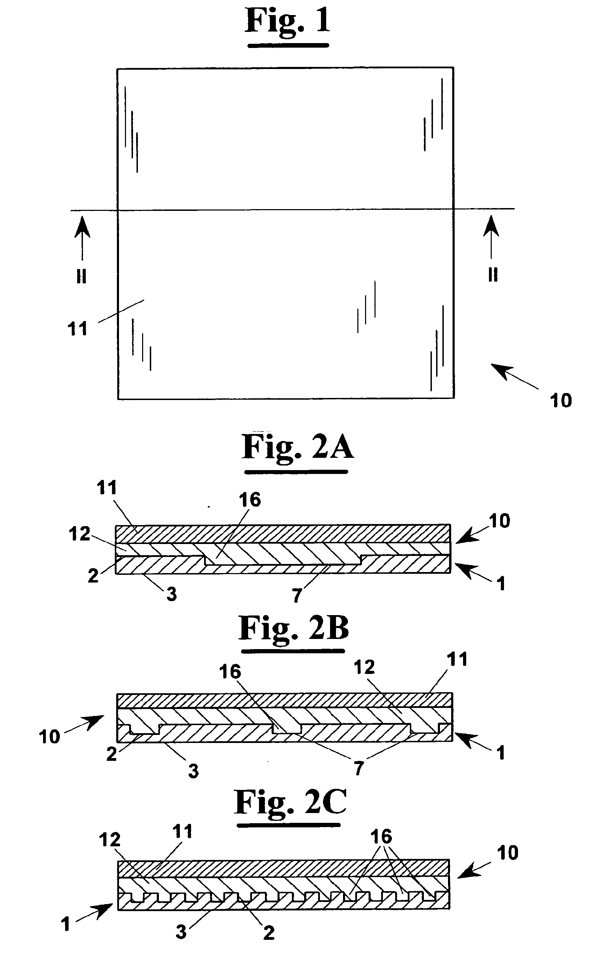

- figure 1 shows a top plan view of a leather tile with plastic resin injections;
- figures from 2A to the 2E show a cross sectional view according to arrows II-II the leather tile of figure 1 mounted on some possible exemplary embodiments which are arranged as supports;
- figures from 3 to 6 show a perspective view of some possible exemplary embodiments of leather tiles distinct from the relative supports;
- figure 7 shows a perspective view of a leather tile mounted on a support;
- figure 8 shows a perspective view of a plane cross section of a floor lined with leather tiles mounted onto the supports of figure 2A-2D;
- figures 9 and 10 show a perspective view of an exemplary embodiment of a support and of a leather tile alternative to figures from 3 to 6, respectively in an exploded configuration and in a gathered configuration;
- figure 11 shows a cross sectional view of the leather tile and of the relative support of figure 10, according to arrows XI-XI;
- figure 12 shows a cross sectional view of the leather tile and of the relative support of figure 10, according to arrows XII-XII;
- figure 13 shows a cross section of a possible exemplary embodiment of a mould of plastic resin injection that can be used to provide the support of figures 4 or 5,

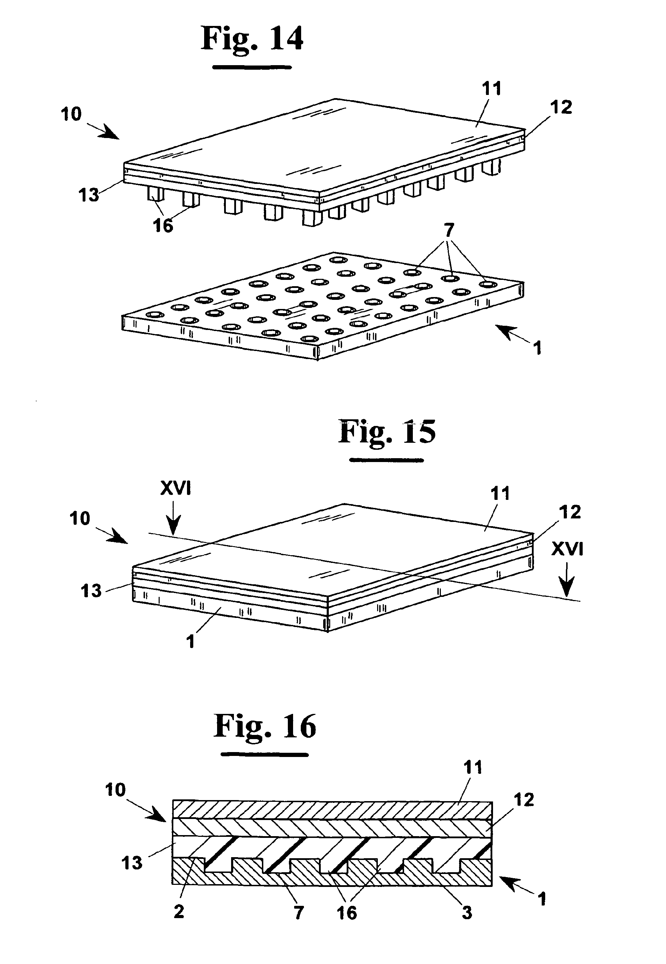

- figure 14 shows a perspective view of a leather tile separated from the relative support according to an exemplary embodiment alternative to that shown in figures from 3 to 6;
- figure 15 shows a perspective view of the leather tile of figure 14 mounted on the support;
- figure 16 shows a cross sectional view of the leather tile and of the relative support of figure 10, according to arrows XVI-XVI.

### Description of a preferred exemplary embodiment

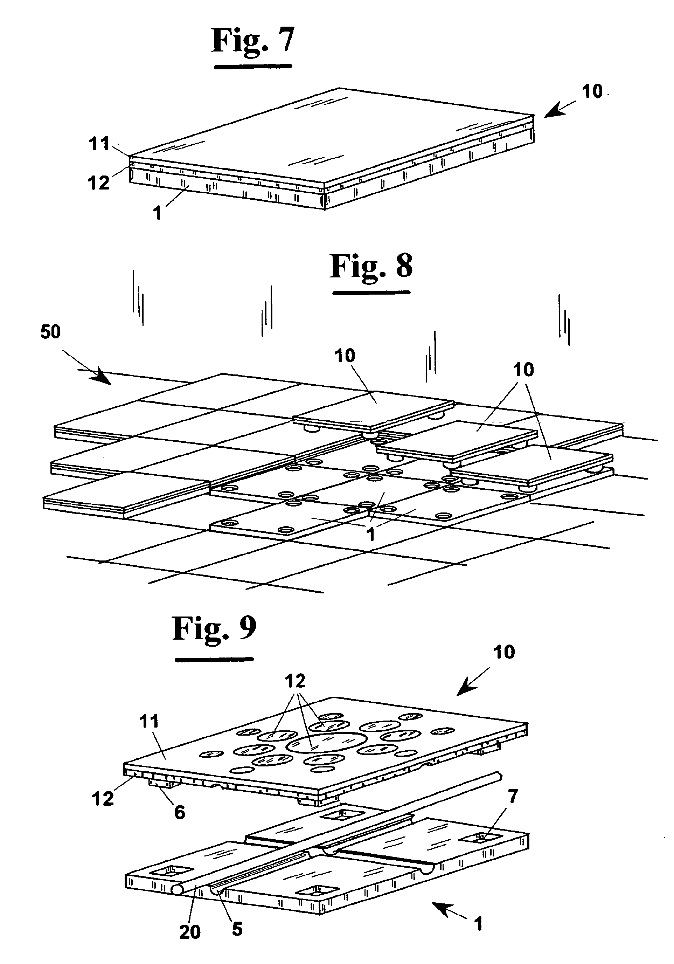

In figures from 2A to 2E some possible exemplary embodiments are shown of a support 1, for tiles 10 having a leather layer 11 and a plastic resin layer 12 fixed to it (figure 1) that extends up to the upper surface of tile 10 through suitable holes (figure 9-12).

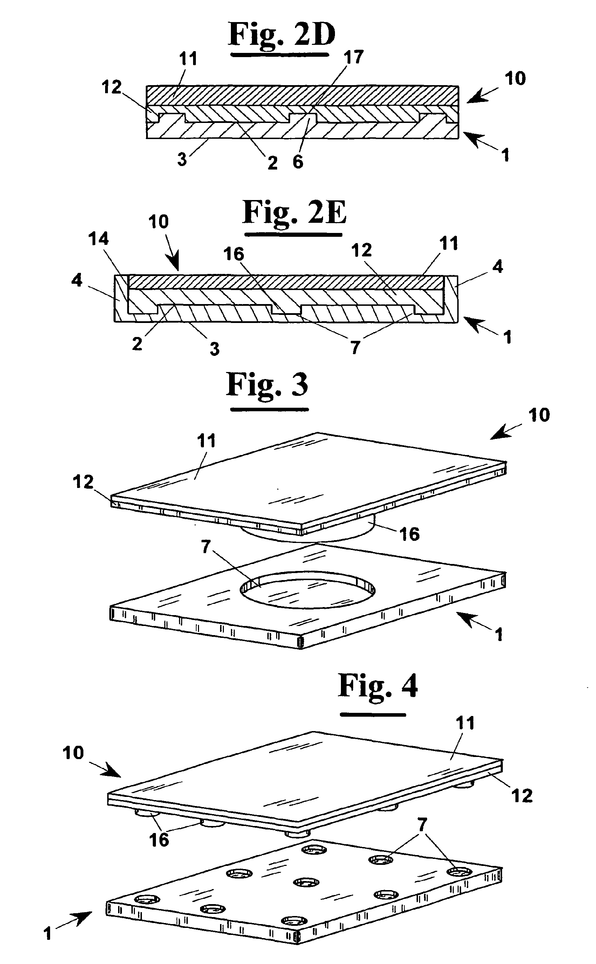

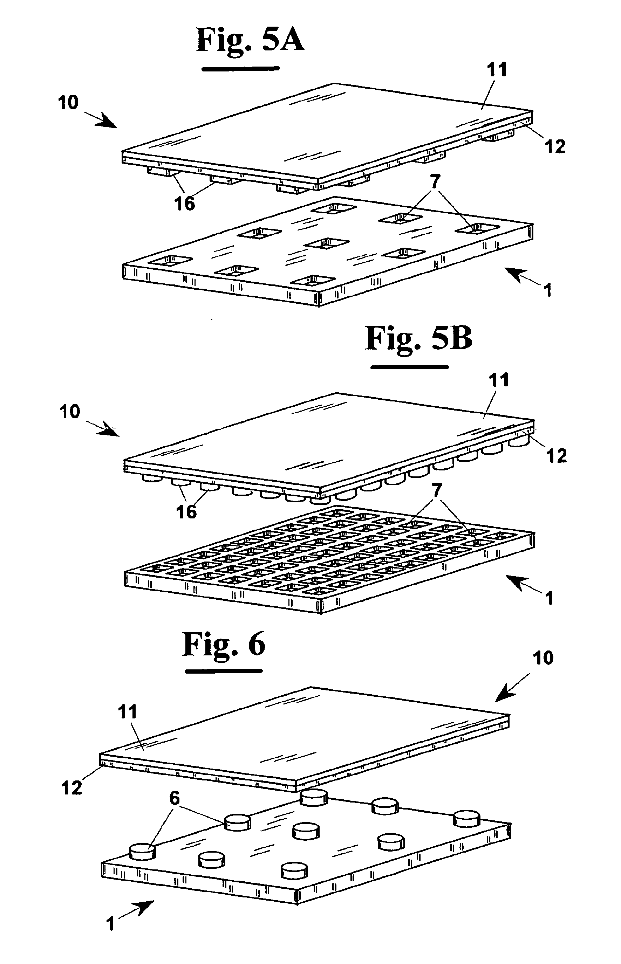

In the case shown in the figures support 1 is a plane element equipped with a first face 2 and a second face 3 opposite to the first face. In particular, first face 2, suitable for receiving the tile, has, for example, a single recess 7 (figure 3), or of a plurality of recesses 7 (figures 4 and 5), each of which suitable for receiving a projection 16 present on the plastic resin layer 12 of tile 10. Alternatively, the surface 2 of support 1 is equipped with a projection 6 (figure 6) that can be coupled to a recess 17 of the plastic resin layer 12 of tile 10. The second face 3 of support 1 in operative conditions remains on the surface to coat and is connected to it by glue or other equivalent systems. This way, a firm fastening is achieved of tile 10 to support 1 and then to the surface 50 to coat (figure 8) by a mechanism that can be easily unfastened. This allows removing quickly tile 10 from the relative support 1 to provide a quick change thereof in a desired moment.

Support 1 can be made of plastic resin whereby at the moment of coupling it to a tile 10 the edge of each recess 7 is elastically forced by the corresponding projection 16.

As shown in figures from 3 to 6, the projections 6 or 16, depending on whether they are made respectively on support 1 or on the resin layer 12 of tile 10, and the respective recesses 7 or 17, may have circular, square, rectangular cross section, etc. In particular, as shown in figure 5B, it is also possible to couple recesses 7, or 17, having square cross section with projections 16, or 6, having circular cross section. Furthermore, the number of the recesses 7, or 17, can be higher than the number of projections 6, or 16, in order to provide the larges number of possible combinations, for example, to allow an easy matching of support 1 and of tile 10 when at the corners of the surface to coat tiles 10 and supports 1 have to be trimmed for completing the coating. In an exemplary embodiment of the invention, not shown in the figures, support 1 on face 2 can have a combination of projections 6 and of recesses 7.

In figures from 9 to 12 an exemplary embodiment is shown for support 1 having a groove 5 that extends between two edges of support 1, for example, two opposite edges, in order to house a heating element, for example a lead wire 20 connected to a heating system, so that the coating provides a ground heating. This way, it is possible to provide a very effective heat exchange owing to the high heating surface that is eventually obtained.

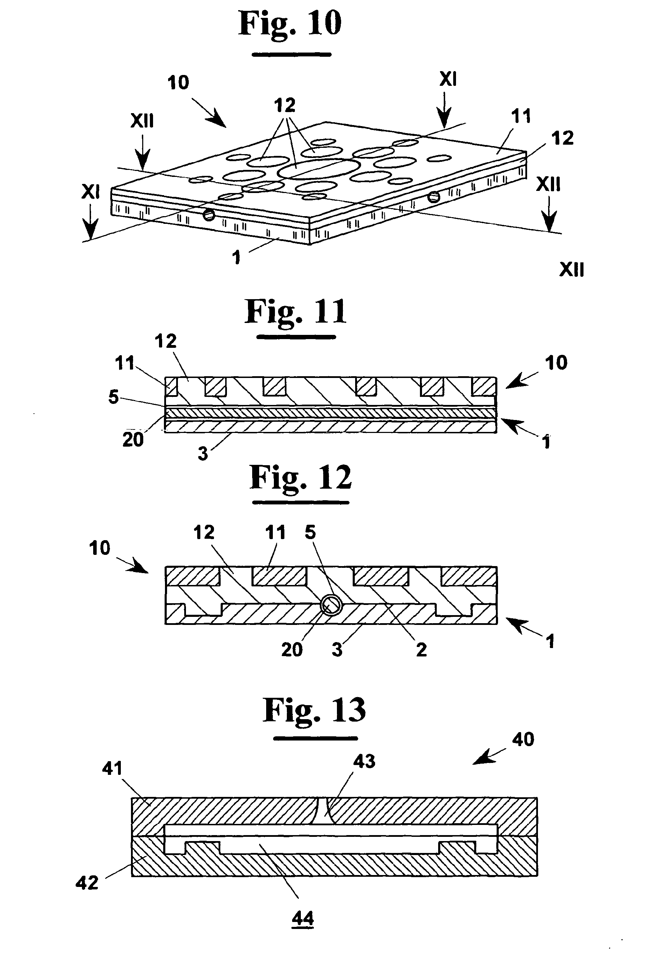

Support 1 may have a portion exceeding tile 10 that it sustains. In this case, side edges 4 can embrace the side edges 14 of tile 10 for easily receive other adjacent supports 1 (figure 2E). In figure 13 a mould for plastic resin injection 40 is shown that can be used to obtain support 1 according to the invention. It is made of two halves 41 and 42 and has a channel 43 for introducing molten plastic resin that flows into chamber 44 and that after cooling forms support 1.

In figures from 14 to 16, finally, an exemplary embodiment of the invention is shown for a tile 10 alternative to what above described. In particular, in this case, tile 10 comprises a leather layer 11 to which a first plastic resin layer 12 is fixed constrained in turn to a second plastic resin layer 13 equipped with projections 16 (or alternatively with the recesses), for engaging with recesses 7 (or alternatively with the projections), of support 1 arranged on the surface which faces it. In particular, first plastic resin layer 12 is made of a plastic material of different type from that of second layer 13. This allows to optimize the final product because, for example, as first resin layer 12 a resilient material can be used capable of adapting better to the surface of the leather layer 11 flattening its irregularities, whereas as second layer 13 a plastic resin with stiffness higher can be used, much more suitable for making the elements of mutual engagement 6 and 17 that can be easily coupled.

## Claims

1. Arrangement of a support (1) and a tile (10) that engage mutually, wherein said tile has a leather layer (11) and at least one plastic resin layer fixed to said leather layer, said support and said tile having cooperating means, the cooperating means (7) of said support being suitable for providing a mutual engagement with the cooperating means (16) of said tile, **characterised in that said** plastic resin layer comprises a first plastic resin layer (12) fixed to the leather layer and a second plastic resin layer (13) fixed to the first plastic resin layer, said second plastic resin layer being of a different type from the first resin layer, and **in that** the cooperating means of said tile are made of said second plastic resin layer.

2. Arrangement of a support and a tile, according to claim 1, wherein said cooperating means comprises at least one projection and/or at least one recess.

3. Arrangement of a support and a tile, according to claim 1, **characterised in that** said support is made of plastic resin of resilient type.

4. Arrangement of a support and a tile, according to claim 1, **characterised in that** said support is equipped with at least one groove that crosses it between two side edges thereof suitable for receiving a heating means.

5. Arrangement of a support and a tile, according to claim 1, **characterised in that** said support has a portion exceeding said leather tile that it sustains.

6. Arrangement of a support and a tile, according to claim 5, **characterised in that** said support has shaped side edges, in particular bevelled, which make easier to approach adjacent supports during the laying steps.

7. Arrangement of a support and a tile, according to claim 2, wherein said or each projection is integrated to said support.

8. Arrangement of a support and a tile, according to claim 2, wherein said or each projection is separate from said support.

9. Arrangement of a support and a tile according to claim 1, **characterised in that** said support is provided as a plurality of supports operatively connected to one another in order to form a single body capable of receiving a plurality of leather tiles with injections of plastic resin.

10. Arrangement of a support and a tile according to claim 1, **characterised in that** said first plastic resin layer fixed to said leather layer is extended up to the upper surface of the leather layer by through holes.

## Patentansprüche

1. Anordnung eines Trägers (1) und einer Fliese (10), die ineinander eingreifen, wobei die Fliese eine Lederschicht (11) und wenigstens eine Kunststoffharzschicht, die an der Lederschicht fixiert ist, aufweist, der Träger und die Fliese zusammenwirkende Mittel aufweisen und die zusammenwirkenden Mittel (7) des Trägers zum Bereitstellen eines gegenseitigen Eingriffs mit den zusammenwirkenden Mitteln (16) der Fliese geeignet sind, **dadurch gekennzeichnet, dass** die Kunststoffharzschicht eine erste Kunststoffharzschicht (12), die an der Lederschicht fixiert ist, und eine zweite Kunststoffharzschicht (13), die an der ersten Kunststoffharzschicht fixiert ist, umfasst, wobei die zweite Kunststoffharzschicht von einer Art ist, die sich von der ersten Kunststoffharzschicht unterscheidet, und **dadurch**, dass die zusammenwirkenden Mittel der Fliese aus der zweiten Kunststoffharzschicht hergestellt sind.

2. Anordnung eines Trägers und einer Fliese nach Anspruch 1, wobei das zusammenwirkende Mittel wenigstens einen Vorsprung und/oder wenigstens eine Aussparung umfasst.

3. Anordnung eines Trägers und einer Fliese nach Anspruch 1, **dadurch gekennzeichnet, dass** der Träger aus Kunststoffharz der elastischen Art hergestellt ist.

4. Anordnung eines Trägers und einer Fliese nach Anspruch 1, **dadurch gekennzeichnet, dass** der Träger mit wenigstens einer Nut ausgestattet ist, die ihn zwischen zwei Seitenkanten durchkreuzt und zur Aufnahme eines Heizmittels geeignet ist.

5. Anordnung eines Trägers und einer Fliese nach Anspruch 1, **dadurch gekennzeichnet, dass** der Träger einen Abschnitt aufweist, der über den Lederziegel, den er trägt, hinausgeht.

6. Anordnung eines Trägers und einer Fliese nach Anspruch 5, **dadurch gekennzeichnet, dass** der Träger geformte, insbesondere abgeschrägte, Seitenkanten aufweist, welche es leichter machen, benachbarte Träger während der Verlegungsschritte einander anzunähern.

7. Anordnung eines Trägers und einer Fliese nach Anspruch 2, wobei der oder jeder Vorsprung in den Träger integriert ist.

8. Anordnung eines Trägers und einer Fliese nach Anspruch 2, wobei der oder jeder Vorsprung vom Träger getrennt ist.

9. Anordnung eines Trägers und einer Fliese nach Anspruch 1, **dadurch gekennzeichnet, dass** der Träger als eine Mehrzahl von Trägern vorgesehen ist, die funktionsfähig miteinander verbunden sind, um einen einzigen Körper zu bilden, der zur Aufnahme einer Mehrzahl von Lederziegeln mit Einspritzungen von Kunststoffharz imstande ist.

10. Anordnung eines Trägers und einer Fliese nach Anspruch 1, **dadurch gekennzeichnet, dass** sich die erste Kunststoffharzschicht, die an der Lederschicht fixiert ist, durch Löcher zur oberen Fläche der Lederschicht erstreckt.

## Revendications

1. Agencement d'un support (1) et une dalle (10) qui entrent mutuellement en prise, dans lequel ladite dalle possède une couche de cuir (11) et au moins une couche de résine plastique fixée à ladite couche de cuir, ledit support et ladite dalle comportant des moyens de coopération, les moyens de coopération (7) dudit support étant appropriés pour fournir une prise mutuelle avec les moyens de coopération (16) de ladite dalle, **caractérisé en ce que** ladite couche de résine plastique comprend une première couche de résine plastique (12) fixée à la couche de cuir et une seconde couche de résine plastique (13) fixée à la première couche de résine plastique, ladite seconde couche de résine plastique étant d'un type différent de la première couche de résine, et **en ce que** les moyens de coopération de ladite dalle sont faits de ladite seconde couche de résine plastique.

2. Agencement d'un support et une dalle selon la revendication 1, dans lequel lesdits moyens de coopération comprennent au moins une saillie et/ou au moins un évidement.

3. Agencement d'un support et une dalle selon la revendication 1, **caractérisé en ce que** ledit support est fait de résine plastique de type résilient.

4. Agencement d'un support et une dalle selon la revendication 1, **caractérisé en ce que** ledit support est équipé d'au moins une rainure, qui le traverse entre deux bords latéraux de celui-ci, appropriée pour recevoir un moyen de chauffage.

5. Agencement d'un support et une dalle selon la revendication 1, **caractérisé en ce que** ledit support possède une partie dépassant ladite dalle en cuir qu'il supporte.

6. Agencement d'un support et une dalle selon la revendication 5, **caractérisé en ce que** ledit support possède des bords latéraux façonnés, en particulier biseautés, qui facilitent l'approche de supports adjacents au cours des étapes de pose.

7. Agencement d'un support et une dalle selon la revendication 2, dans lequel ladite ou chaque saillie est intégrée audit support.

8. Agencement d'un support et une dalle, selon la revendication 2, dans lequel ladite ou chaque saillie est séparée dudit support.

9. Agencement d'un support et une dalle selon la revendication 1, **caractérisé en ce que** ledit support est fourni en tant que pluralité de supports reliés les uns aux autres de façon opérationnelle afin de former un corps unique capable de recevoir une pluralité de dalles en cuir avec des injections de résine plastique.

10. Agencement d'un support et une dalle selon la revendication 1, **caractérisé en ce que** ladite première couche de résine plastique fixée à ladite couche de cuir est étendue jusqu'à la surface supérieure de la couche de cuir par des trous débouchants.
